# EUROPÄISCHE PATENTSCHRIFT

(11) **EP 2 576 265 B1**
(45) Veröffentlichungstag und Bekanntmachung des Hinweises auf die Patenterteilung: **05.11.2014**
(21) Anmeldenummer: 11711576.6
(22) Anmeldetag: 01.04.2011
(51) Int. Cl.: B60K 15/05, B60K 15/04

(54) **TANKVERSCHLUSS**
TANK CLOSURE
FERMETURE DE RÉSERVOIR

(30) Priorität: 27.05.2010 DE 102010029354
(43) Veröffentlichungstag der Anmeldung: 10.04.2013
(73) Patentinhaber: Bayerische Motoren Werke Aktiengesellschaft, 80809 München (DE)
(72) Erfinder: AULINGER, Stefan, 81669 München (DE); VOGES, Hauke, 82278 Althegnenberg (DE); SCHABLITZKI, Ulrich, 85375 Neufahrn (DE); BLOTTKO, Rainer, 81247 München (DE); STAHL, Hans-Ulrich, 80809 Muenchen (DE)
(74) Vertreter: Schmidt, Günter H. H.
(86) Internationale Anmeldenummer: PCT/EP2011/055081
(87) Internationale Veröffentlichungsnummer: WO 2011/147612

(56) Entgegenhaltungen:
- DE-A1- 19 922 042
- DE-A1-102008 036 869
- FR-A1- 2 881 688
- US-A- 4 784 423

## Beschreibung

Die Erfindung betrifft einen Tankverschluss zum Verschließen einer Einfüllöffnung eines Tanks mit einem die Einfüllöffnung verschließenden Tankdeckel und einer den Tankdeckel abdeckenden Tankklappe nach dem Oberbegriff des Anspruchs 1.

Aus Sicherheitsgründen sowie aus Gründen des Emissionsschutzes müssen Kraftstofftanks von Kraftfahrzeugen an ihrer jeweiligen Tanköffnung fluiddicht, insbesondere gasdicht, verschließbar sein. Hierfür werden üblicherweise Tankdeckel mit einem Gewindeschraubverschluss oder einem Bajonettverschluss verwendet, wobei der Tankdeckel von einer Offenstellung in eine bestimmte, die Tanköffnung dicht verschließende Position zu drehen ist. Wenn eine korrekte Position des Tankdeckels eingenommen ist, so wird dies in der Regel durch einen Endanschlag oder auch durch ein "Klick-Geräusch" signalisiert. Um einen gut abdichtenden Verschluss der Tanköffnung zu gewährleisten, ist es von großer Wichtigkeit, dass der Tankdeckel in korrekter Position in der Tanköffnung gehaltert ist, und dass im Fall einer fehlerhaften Positionierung des Tankdeckels dem Fahrer ein Fehler angezeigt wird.

Die DE 199 07 384 A1 offenbart ein Kraftfahrzeug mit einer schwenkbar gelagerten Tankklappe, die in Schließlage den Tankdeckel überdeckt, der seinerseits den Tankeinfüllstutzen verschließt. Bei geschlossenem Tankdeckel und einer sich in Schließlage befindender Tankklappe ist zwischen den beiden Teilen ein minimaler Abstand von vorzugsweise 1 mm bis 2 mm vorhanden. Hierdurch liegt die Tankklappe bei unkorrekt oder nicht vollständig auf den Tankeinfüllstutzen aufgesetztem Tankdeckel an dem Tankdeckel an und steht dadurch von einer Seitenwand ab. Auf diese Art und Weise wird der unkorrekt verschlossene Tankeinfüllstutzen dem Fahrzeuginsassen signalisiert.

Der oben angeführte Stand der Technik basiert auf einem Tankdeckel mit einem herkömmlichen Schraubverschluss mit einem Gewinde, das eine definierte Gewindesteigung aufweist. In Abhängigkeit von der Gewindesteigung erfolgt beim Einschrauben des Tankdeckels eine Änderung der Höhe, um die der Tankdeckel aus dem Einfüllstutzen hervorsteht. Ist der Tankdeckel nicht vollkommen eingeschraubt, so steht er um einen bestimmten Höhenabschnitt hervor und verhindert, dass die Tankklappe die Schließlage einnimmt.

Tankdeckel mit Bajonettverschlüssen weisen jedoch keine oder nur eine geringfügige Gewindesteigung auf. Ist ein Tankdeckel mit einem Bajonettverschluss nicht korrekt in einem Einfüllstutzen verschraubt, so steht dieser kaum ab. Die Tankklappe kann in solch einem Fall trotzdem die Schließlage einnehmen. Fehlerhaft positionierte Tankdeckel werden beim oben genannten Stand der Technik nicht bzw. zumindest nicht sicher erkannt.

Weiteren Stand der Technik zeigt die zur Bildung des Oberbegriffs des Patentanspruchs 1 herangezogene US 4,784,423. Hierbei ist die Tankklappe, die sich in der geschlossenen Position einigermaßen bündig in eine Aussparung in der Karosserie des mit diesem Tankverschluss versehenen Kraftfahrzeugs einfügt, schwenkbar am Tankdeckel befestigt. In der geschlossenen Position der Tankklappe, in der diese ein am Tankverschluss vorgesehenes Schloss abdeckt, greifen die Tankklappe und der Tankdeckel quasi formschlüssig ineinander ein. Einen offensichtlichen Hinweis darüber, ob der Tankdeckel vollständig geschlossen ist oder nicht vollständig geschlossen ist, kann dieser Stand der Technik jedoch nicht liefern.

Es fordert aber die Gesetzgebung in einigen Staaten, dass in Abhängigkeit von bestimmten Fahrzyklen eine Dichtheitsprüfung des Kraftstofftanks erfolgt. Wird eine Undichtigkeit ermittelt, so muss dem Benutzer des Kraftfahrzeugs ein Defekt mittels eines Aufleuchtens einer Warnlampe mit einem entsprechenden Hinweis angezeigt werden. Einige Fahrzeugtypen sind speziell mit einer Vorrichtung zur elektronisch gesteuerten Erkennung eines nicht korrekt positionierten Tankdeckels ausgestattet. In einem solchen Fall erlaubt der Gesetzgeber, dem Benutzer lediglich einen Hinweis auf den nicht korrekt positionierten Tankdeckel zu geben und auf die Verwendung der Warnlampe (z. B. mit dem generellen Hinweis "Service Engine Soon") zu verzichten.

Es hat sich gezeigt, dass nach einem Betanken eines Kraftfahrzeugs Tanköffnungen häufig nicht korrekt verschlossen werden, was insbesondere bei Fahrzeugen mit einer automatischen Dichtheitsprüfung des Tanks zu einem Warnhinweis führt. Die Fahrzeuge werden häufig unnötigerweise in eine Werkstatt zur Wartung bzw. Überprüfung des Tanks gegeben. Dies führt insbesondere zu Kundenverärgerung und hohen Gewährleistungskosten seitens des Herstellers. Ferner fallen bei einem Einbau einer Vorrichtung zur elektronisch gesteuerten Erkennung eines nicht korrekt positionierten Tankdeckels erhebliche Herstellungskosten an.

Aufgabe der vorliegenden Erfindung ist es, für einen Tankverschluss zum Verschließen einer Einfüllöffnung eines Tanks nach dem Oberbegriff des Anspruchs 1 eine Maßnahme aufzuzeigen, mit Hilfe derer kostengünstig und einfach ein nicht korrekt positionierter Tankdeckel sicher erkannt werden kann.

Die Lösung dieser Aufgabe ist dadurch gekennzeichnet, dass der Tankdeckel eine als Griffleiste ausgebildete Erhebung aufweist, die formschlüssig in eine Vertiefung in der Tankklappe greift, wenn sich der mit einem Bajonettverschluss zum Verschließen der Einfüllöffnung ausgebildete Tankdeckel und die Tankklappe in geschlossener Position befinden.

Es ist ein Tankverschluss zum Verschließen einer Einfüllöffnung eines Tanks mit einem die Einfüllöffnung verschließenden Tankdeckel und einer den Tankdeckel abdeckenden Tankklappe geschaffen, bei dem die einander zugewandten Seiten des Tankdeckels und der Tankklappe formschlüssig über eine definierte Formgebung ineinander greifend gestaltet sind, wenn sich der Tankdeckel relativ zur Tankklappe in einer vorbestimmten und die Einfüllöffnung verschließenden Position befindet.

Wie erläutert weist ein Kraftstofftank eines Kraftfahrzeugs eine Einfüllöffnung zum Betanken des Tanks auf, die vorzugsweise in bzw. an einem Tankstutzen angeordnet ist. Die Einfüllöffnung kann mittels eines erfindungsgemäßen Tankverschlusses fluiddicht verschlossen und geöffnet werden. Der Tankverschluss umfasst einen Tankdeckel sowie eine Tankklappe. Bezüglich des Kraftstofftanks bildet der Tankdeckel einen inneren Verschluss und die Tankklappe einen äußeren Verschluss. Die Tankklappe ist an einer Seitenwand einer Fahrzeugkarosserie gelagert und kann den Tankdeckel über eine erste Bewegung wahlweise in einer Schließlage abdecken bzw. wieder freigeben. Die Tankklappe ist vorzugsweise über einen Schwenk-, Klapp-, Dreh- oder auch Schiebemechanismus in die Schließlage bringbar. In geschlossener Position, also in Schließlage, schließt die Tankklappe vorzugsweise mit der Seitenwand der Fahrzeugkarosserie fluchtend ab und liegt oberflächenbündig an der angrenzenden Seitenwand an.

Der Tankdeckel ist über eine zweite Bewegung in eine die Einfüllöffnung verschließende bzw. in eine die Einfüllöffnung öffnende Position bringbar. Der Tankdeckel weist eine der Tankklappe zugewandte äußere Seite bzw. äußere Seitenfläche und die Tankklappe eine dem Tankdeckel zugewandte innere Seite bzw. innere Seitenfläche auf. Erfindungsgemäß sind die äußere Seitenfläche des Tankdeckels und die innere Seitenfläche der Tankklappe mit einer definierten Formgebung derart gestaltet, dass die beiden Seitenflächen formschlüssig ineinander greifen, wenn sich der Tankdeckel und die Tankklappe in geschlossener Position befinden. Die innere Seitenfläche der Tankklappe bildet eine "Negativform" der äußeren Seitenfläche des korrekt positionierten Tankdeckels.

Die Tankklappe bedeckt erfindungsgemäß nur dann den Tankdeckel und schließt im Wesentlichen oberflächenbündig mit der Seitenwand der Fahrzeugkarosserie ab, wenn sich der Tankdeckel in einer vorbestimmten und die Einfüllöffnung fluiddicht verschließenden Position befindet. Das heißt, der Tankdeckel ist relativ zur Tankklappe in einem bestimmten Winkel angeordnet. Auf diese Weise wird sichergestellt, dass der Tankdeckel in korrekter Position auf der Einfüllöffnung sitzt und nicht verkantet oder nicht vollständig bis zum Anschlag zugedreht ist. Wenn der Tankdeckel nicht in korrekter Position auf der Einfüllöffnung angeordnet ist, dann greift die Tankklappe mit der Oberflächenstruktur der inneren Seitenfläche nicht formschlüssig in die entsprechende Oberflächenstruktur der äußeren Seitenfläche des Tankverschlusses. Während einer Schließbewegung der Tankklappe blockiert diese an der Oberflächenstruktur des Tankdeckels. Hierdurch wird dem Benutzer eines Kraftfahrzeugs vorteilhaft angezeigt, dass der Tankdeckel die Einfüllöffnung nicht fluiddicht verschließt.

Es kann somit auf eine einfache und kostengünstige Weise überprüft werden, ob die Einfüllöffnung eines Tanks korrekt verschlossen ist. Insbesondere bei Fahrzeugen mit Vorrichtungen zur automatischen Tankdichtheitsprüfung kann vorzeitig erkannt werden, ob ein durch eine Werkstatt zu behebender Fehler vorliegt oder ob lediglich der Tank fehlerhaft verschlossen ist. Unnötige Werkstattaufenthalte werden vermieden und Gewährleistungskosten reduziert.

Der Tankdeckel ist mit einem Bajonettverschluss zum Verschließen der Einfüllöffnung ausgebildet. Dabei ist die Einfüllöffnung in einem Tankstutzen des Kraftstofftanks angeordnet. Der Tankdeckel ist dabei mit dem Tankstutzen über eine Steck-Dreh-Bewegung verbindbar. Vorzugsweise weist der Tankstutzen einen Längsschlitz auf, an dessen Ende ein kurzer gewindeartiger Querschlitz anschließt. Der Tankdeckel umfasst bevorzugt ein knopfartiges Element, das zunächst in den Längsschlitz eingeführt und in dem Querschlitz festgeklemmt wird, wodurch eine feste Verbindung zwischen Tankdeckel und Tankstutzen gewährleistet wird. Es ist ein Tankverschluss zur Verfügung gestellt, der leicht verschließ- und wieder lösbar ist.

Dies erweist sich insbesondere im Hinblick auf die oben angeführte DE 199 07 384 A1 als vorteilhaft. Im Gegensatz zu diesem Stand der Technik signalisiert ein erfindungsgemäßer Tankverschluss auch einen fehlerhaft verschlossenen Tankdeckel, wenn dieser in Relation zu seiner eigentlich korrekten Position nicht "hervorsteht" oder "herausragt".

Im weiteren wird auf die weiter oben genannten und im geschlossenen Zustand formschlüssig ineinander greifenden Oberflächenstrukturen des erfindungsgemäßen Tankverschlusses eingegangen. Demnach weist der Tankdeckel eine Erhebung auf, die formschlüssig in eine Vertiefung in der Tankklappe greift, wenn sich der Tankdeckel und die Tankklappe in geschlossener Position befinden. Eine solche Oberflächenstruktur ist besonders einfach und kostengünstig herzustellen. Wenn sich der Tankdeckel relativ zur Tanklappe in einem bestimmten Winkel befindet, so greift die Erhebung in der äußeren Seitenfläche des Tankdeckels formschlüssig in die Vertiefung in der inneren Seitenfläche der Tankklappe. Die Vertiefung in der inneren Seitenfläche der Tankklappe kann beispielsweise durch eine in die Tankklappe eingesetzte Kunststoff-Spritzgussform zur Verfügung gestellt werden. Des Weiteren kann auch eine Tankklappe, bestehend aus Blech, mit einer derartigen Vertiefung geformt bzw. gepresst sein.

In vorteilhafter Weise ist die Erhebung des Tankverschlusses als eine Griffleiste ausgebildet. Damit ist ein Tankverschluss geschaffen, der einen Tankdeckel umfasst, der eine besonders einfache Handhabung gewährleistet. Hierbei kann die Vertiefung von mindestens zwei Leisten begrenzt sein, die einen Innenraum bilden, in den die Griffleiste greift. Vorzugsweise sind auf der inneren Seitenfläche der Tankklappe zwei Leisten parallel zueinander angeordnet, die einen Innenraum bilden. Wenn sich die Tankklappe und der Tankdeckel in geschlossener Position befinden, dann greift die Griffleiste auf der äußeren Seitenfläche des Tankdeckels passgenau in den durch die Leisten gebildeten Innenraum.

Gemäß einer vorteilhaften Weiterbildung des erfindungsgemäßen Tankverschlusses weist die Tankklappe eine Schale auf, die mit den Leisten als ein einstückiges Kunststoff-Spritzgussteil geformt ist. Eine solche Tankklappe ist kostengünstig herstellbar und im Herstellungsprozess einfach mit weiteren Bauteilen zusammenzufügen.

Gemäß einer vorteilhaften Weiterbildung des erfindungsgemäßen Tankverschlusses sind die Leisten als Kunststoffspritzgussteil gebildet und mit einer Schale der Tankklappe verbunden. Derartige Leisten weisen ein geringes Eigengewicht auf und sind im Herstellungsprozess kostengünstig zu produzieren. Sie sind insbesondere geeignet, mit einer inneren Verschalung einer Tankklappe beispielsweise durch Verkleben verbunden zu werden.

Im übrigen kann die Tankklappe über eine erste Bewegung von einer offenen in eine geschlossene Position und der Tankdeckel über eine zweite Bewegung von einer offenen in eine geschlossene Position bringbar sein, und mittels der ersten Bewegung der Tankklappe kann eine Kraft auf den Tankdeckel übertragbar sein, wodurch die zweite Bewegung des Tankdeckels ausführbar ist. Bei einer derartigen Weiterbildung kann die Tankklappe auf der inneren Seitenfläche vorzugsweise - bezogen auf eine ebene Seitenfläche - einen schräg ausgebildeten Abschnitt aufweisen. Während einer ersten Bewegung, bei der die Tankklappe von einer offenen in eine geschlossenen Position gebracht wird, wird die Tankklappe mit dem schräg ausgebildeten Abschnitt gegen einen auf eine Einfüllöffnung aufgesetzten Tankdeckel gedrückt. Hierdurch wird auf den Tankdeckel eine Kraft ausgeübt, die den Tankdeckel veranlasst, sich in eine die Einfüllöffnung fluiddicht verschließende Position zu bewegen. Das heißt, durch die erste Bewegung der Tankklappe wird eine zweite Bewegung des Tankdeckels induziert, durch die der Tankdeckel in eine korrekte Position gebracht wird. Hierbei erfolgt eine Drehung des Tankdeckels relativ leichtgängig und der Tankdeckel ist lediglich über einen kleinen Winkelbereich zu drehen.

Ferner kann der Tankdeckel mit der Einfüllöffnung des Tanks über ein Verbindungselement verliersicher verbunden sein, beispielsweise über eine Kette oder eine Schnur. Ist der Tankdeckel nicht auf die Einfüllöffnung aufgesetzt, so verhindert bereits ein Heraushängen des Verbindungselements, nämlich durch ein Blockieren der Tankklappe, dass die Tankklappe eine Schließlage einnehmen kann. Ferner hängt der Tankdeckel deutlich sichtbar an der Seitenwand der Fahrzeugkarosserie herunter und signalisiert, dass die Einfüllöffnung nicht korrekt verschlossen ist.

Bei einem Kraftfahrzeug, das mit einem erfindungsgemäßen Tankverschluss ausgestattet ist, ist gewährleistet, dass auf kostengünstige Art und Weise stets überprüfbar ist, ob ein Kraftstofftank fluiddicht verschlossen ist. Somit können insbesondere bei Kraftfahrzeugen mit einer Vorrichtung zur automatischen Tankdichtheitsüberprüfung unnötige Werkstattaufenthalte vermieden und Gewährleistungskosten seitens der Hersteller gesenkt werden.

Nachfolgend wird ein Ausführungsbeispiel der erfindungsgemäßen Lösung anhand der beigefügten Zeichnungen näher erläutert. Es zeigen:
- Fig. 1: eine perspektivische Ansicht eines erfindungsgemäßen Tankverschlusses in einer eine Einfüllöffnung nicht verschließenden Stellung,
- Fig. 2: die Seitenansicht II in Fig. 1,
- Fig. 3: eine perspektivische Ansicht des erfindungsgemäßen Tankverschlusses gemäß Fig. 1 in einer eine Einfüllöffnung verschließenden Stellung, und
- Fig. 4: die Seitenansicht IV in Fig. 3.

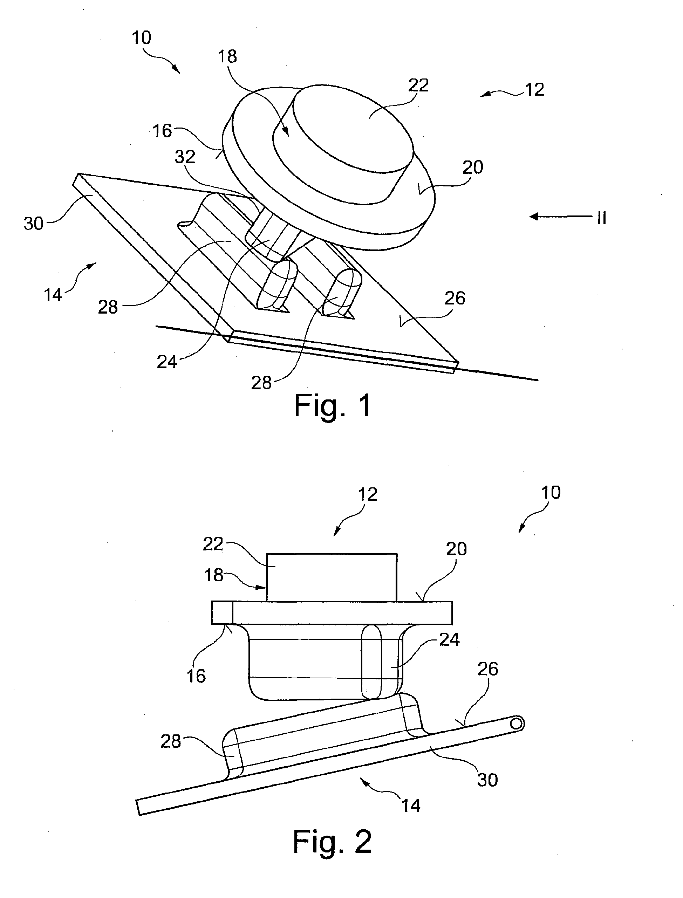

Fig. 1 und 2 zeigen einen erfindungsgemäßen Tankverschluss 10 zum wahlweisen Verschließen und Öffnen einer hier nicht dargestellten Tankeinfüllöffnung eines Kraftfahrzeugs. Der Tankverschluss gemäß den Fig. 1 und 2 ist in einer Position dargestellt, in der die Tankeinfüllöffnung nicht korrekt verschlossen ist. Der Tankverschluss 10 umfasst einen Tankdeckel 12 und eine Tankklappe 14, die den Tankdeckel 12 über eine Schwenk- bzw. Klappbewegung in einer ersten Position freigeben oder in einer zweiten Position, in einer so genannten Schließlage, vollflächig abdecken kann.

Der Tankdeckel 12 weist auf einer inneren, der Tankeinfüllöffnung zugewandten Seite 16 einen Absatz 18 mit einem nicht näher dargestellten Bajonettverschluss 20 auf. Der Absatz 18 ist derart ausgebildet, dass er in eine Öffnung eines hier nicht dargestellten Einfüllstutzens des Kraftstofftanks einführbar ist. Der Bajonettverschluss 20 greift dabei in eine entsprechend ausgebildete Gewindefassung in einer inneren Wandung des Einfüllstutzens, so dass über eine Steck-Drehbewegung der Einfüllstutzen fluiddicht verschlossen bzw. wieder geöffnet werden kann. Auf einer äußeren, der Tankklappe 14 zugewandten Seite 22 ist eine Erhebung in Form einer Griffleiste 24 angeordnet, mittels der ein Benutzer den Tankdeckel 12 auf eine einfache Art und Weise handhaben kann.

Die Tankklappe 14 ist an einer nicht dargestellten äußeren Fahrzeugwand einer Fahrzeugkarosserie derart schwenk- bzw. klappbar gelagert, dass sie den Tankdeckel 12 über eine Schwenk- bzw. Klappbewegung wahlweise abdecken oder freigeben kann, also den Tankdeckel 12 vollflächig in der Schließlage abdeckt bzw. freigibt. Die Tankklappe 14 weist an einer inneren, der äußeren Seite 22 des Tankdeckels 16 zugewandten Seite 26 zwei Leisten 28 auf, die aus einem Kunststoff-Spritzgussteil gebildet und mit einer inneren Verschalung 30 der Tankklappe 14 verbunden sind. Die beiden Leisten 28 sind parallel zueinander beabstandet und schließen einen Innenraum 32 ein. Der Abstand zwischen den beiden Leisten 28 ist der Form der Griffleiste 24 angepasst, so dass die Griffleiste 24 formschlüssig in den Innenraum 32 greift, wenn sich der Tankdeckel 12 in einer vorbestimmten und die Tankeinfüllöffnung fluiddicht verschließenden Position befindet und die Tankklappe 14 auf den Tankdeckel 12 geschwenkt bzw. geklappt ist. Vorliegend befindet sich der Tankdeckel 12 in einer die Tankeinfüllöffnung nicht korrekt verschließenden Position, so dass während einer Klappbewegung der Tankklappe 14 auf den Tankdeckel 12 der Innenraum 32, der durch die beiden Leisten 28 gebildet wird, nicht mit der Griffleiste 24 des Tankdeckels 12 ineinander greift. Die Tankklappe 14 wird durch die Griffleiste 24 blockiert und kann keine Schließlage einnehmen, das heißt die Tankklappe 14 kommt nicht oberflächenbündig mit der Außenwand der Fahrzeigkarosserie zu liegen, sondern steht von dieser ab. Dadurch wird dem Benutzer des Kraftfahrzeugs signalisiert, dass der Tankdeckel 12 die Tankeinfüllöffnung nicht fluiddicht verschließt.

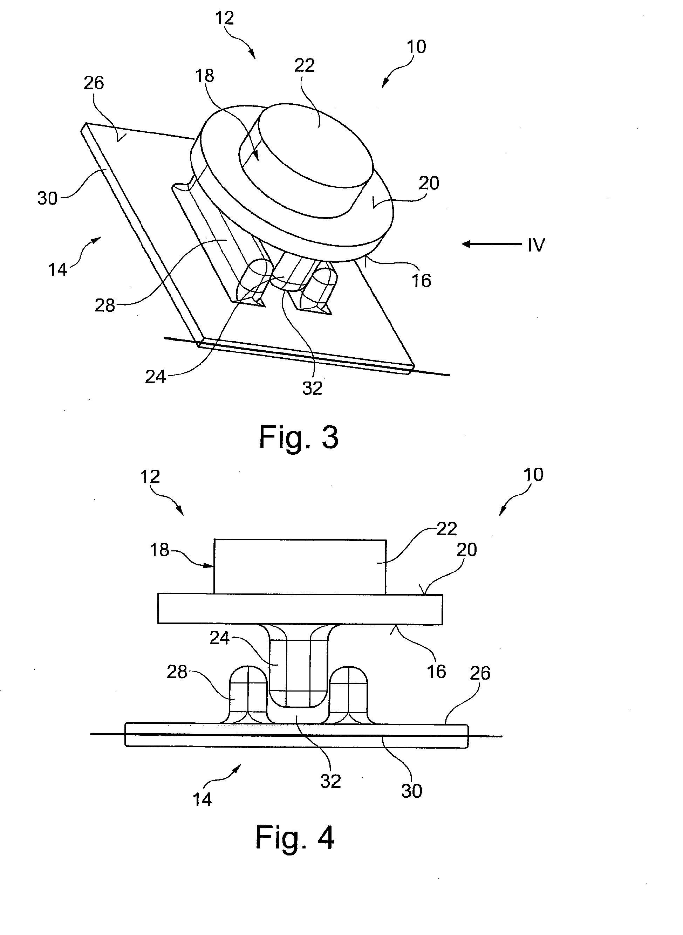

Fig. 3 und 4 zeigen den erfindungsgemäßen Tankverschluss 10 in geschlossener Stellung, das heißt, der Tankdeckel 12 ist in der Tankeinfüllöffnung korrekt positioniert und verschließt diese fluiddicht. Während einer Schwenk- bzw. Klappbewegung der Tankklappe 14 in Richtung des Tankdeckels 12 greifen die einander zugewandten Seiten 22, 26, nämlich die Griffleiste 18 und der Innenraum 32 formschlüssig ineinander. In geschlossener Stellung des Tankverschlusses 10 deckt die Tankklappe 14 den Tankdeckel 12 vollständig ab und liegt oberflächenbündig an der Außenwand der Fahrzeugkarosserie an. Dem Benutzer des Fahrzeugs wird auf diese Weise signalisiert, dass sich der Tankdeckel 12 in einer Position befindet, in der die Tankeinfüllöffnung fluiddicht verschlossen ist.

## Patentansprüche

1. Tankverschluss (10) zum Verschließen einer Einfüllöffnung eines Tanks mit einem die Einfüllöffnung verschließenden Tankdeckel (12) und einer den Tankdeckel (12) abdeckenden Tankklappe (14), wobei die einander zugewandten Seiten des Tankdeckels (12) und der Tankklappe (14) formschlüssig über eine definierte Formgebung (24; 28) ineinander greifend gestaltet sind, wenn sich der Tankdeckel (12) relativ zur Tankklappe (14) in einer vorbestimmten und die Einfüllöffnung verschließenden Position befindet,
**dadurch gekennzeichnet, dass** der Tankdeckel (12) eine als Griffleiste (24) ausgebildete Erhebung (24) aufweist, die formschlüssig in eine Vertiefung (32) in der Tankklappe (14) greift, wenn sich der mit einem Bajonettverschluss (20) zum Verschließen der Einfüllöffnung ausgebildete Tankdeckel (12) und die Tankklappe (14) in geschlossener Position befinden.

2. Tankverschluss (10) nach Anspruch 1, bei dem die Vertiefung von mindestens zwei Leisten (28) begrenzt ist, die einen Innenraum (32) bilden, in den die Griffleiste (24) greift.

3. Tankverschluss (10) nach Anspruch 2, bei dem die Tankklappe (14) eine Schale aufweist, die mit den Leisten (28) als ein einstückiges Kunststoff-Spritzgussteil geformt ist.

4. Tankverschluss (10) nach Anspruch 2, bei dem die Leisten (28) als Kunststoffspritzgussteil gebildet und mit einer Schale der Tankklappe (14) verbunden sind.

## Claims

1. A tank closure (10) for closing a filling opening of a tank having a tank cap (12) closing the filling opening and a tank flap (14) covering the tank cap (12), wherein the mutually facing sides of the tank cap (12) and the tank flap (14) are designed to engage with one another in a positive locking manner by means of a defined shaping (24; 28) when the tank cap (12) is in a predetermined position closing the filling opening relative to the tank flap (14), **characterised in that** the tank cap (12) has an elevation (24) configured as a handle strip (24), which engages in a positive locking manner in an indentation (32) in the tank flap (14) when the tank cap (12) configured with a bayonet closure (20) to close the filling opening and the tank flap (14) are in the closed position.

2. A tank closure (10) according to claim 1, wherein the indentation is limited by at least two strips (28), which form an interior space (32), in which the handle strip (24) engages.

3. A tank closure (10) according to claim 2, wherein the tank flap (14) has a shell, which is formed with the strips (28) as a one-piece plastics material injection-moulded part.

4. A tank closure (10) according to claim 2, wherein the strips (28) are formed as a plastics material injection-moulded part and connected to a shell of the tank flap (14).

## Revendications

1. Fermeture de réservoir (10) pour fermer l'orifice de remplissage d'un réservoir à l'aide d'un bouchon de réservoir (12) fermant l'orifice de remplissage et d'un volet (14) couvrant le bouchon de réservoir (12),
les faces en regard du bouchon (12) et du volet (14) étant réalisées pour s'interpénétrer par une liaison par la forme, par une mise en forme définie (24, 28) lorsque le bouchon (12) se trouve dans une position prédéfinie fermant l'orifice de remplissage par rapport au volet (14), fermeture de réservoir **caractérisée en ce que**
le bouchon (12) comporte un bossage (24) en forme de longeron de préhension (24) qui pénètre dans une cavité (32) du volet (14) par une liaison par la forme si le bouchon (12) muni d'une fermeture du type baïonnette (20) pour fermer l'orifice de remplissage et le volet (14) sont en position fermée.

2. Fermeture de réservoir (10) selon la revendication 1,
dans laquelle
la cavité est délimitée par au moins deux longerons (28) qui forment une cavité (32) dans laquelle pénètre le longeron de poignée (24).

3. Fermeture de réservoir (10) selon la revendication 2,
dans laquelle
le volet (14) comporte une coque formée avec les longerons (28) comme pièce injectée en matière plastique en une seule partie.

4. Fermeture de réservoir (10) selon la revendication 2,
dans laquelle
les longerons (28) sont réalisés sous la forme d'une pièce injectée en matière plastique et sont reliés à une coque du volet (14).
